# FASCICULE DE BREVET EUROPEEN

(11) **EP 1 189 517 B1**
(45) Date de publication et mention de la délivrance du brevet: **28.07.2004**
(21) Numéro de dépôt: 00949654.8
(22) Date de dépôt: 06.07.2000
(51) Int. Cl.: A23C 9/123

(54) **PROCEDE DE PREPARATION D'UN PRODUIT LACTE IMMUNOSTIMULANT ET SES APPLICATIONS**
VERHFAHREN ZUR HERSTELLUNG EINES MILCHPRODUKTES MIT IMMUNSTIMULIERENDER WIRKUNG, UND DESSEN VERWENDUNG
METHOD FOR THE PRODUCTION OF AN IMMUNOSTIMULANT MILK PRODUCT AND USES THEREOF

(30) Priorité: 06.07.1999 FR 9908691
(43) Date de publication de la demande: 27.03.2002
(73) Titulaire: COMPAGNIE GERVAIS-DANONE, F-92302 Levallois Perret (FR)
(72) Inventeur: BLAREAU, Jean-Pierre, F-59114 Steenvoorde (FR); ROMOND, Marie-Bénédicte, F-59800 Lille (FR); ROMOND, Charles, F-59110 La Madeleine (FR); LECROIX, Francis, F-59270 Godewaersvelde (FR); GONTIER, Charles, F-19360 Malemort-sur-Corrèze (FR)
(74) Mandataire: Vialle-Presles, Marie José
(86) Numéro de dépôt international: PCT/FR2000/001946
(87) Numéro de publication internationale: WO 2001/001785

(56) Documents cités:
- EP-A- 0 577 904
- FR-A- 2 506 129
- FR-A- 2 560 046
- US-A- 5 711 977
- US-A- 5 902 578
- DATABASE WPI Section Ch, Week 200002 Derwent Publications Ltd., London, GB; Class D13, AN 2000-021383 XP002132839 & PH 29 583 A (PHAM C B), 1 avril 1996 (1996-04-01)

## Description

La présente invention est relative à l'utilisation de bifidobactéries pour la préparation d'aliments lactés immunostimulants convenant en particulier à l'alimentation infantile : aliments pouvant être sous forme liquide ou poudre.

Le genre *Bifidobacterium* fait partie de la famille des *Actinomycetaceae ;* il regroupe des bacilles à Gram positif, anaérobies stricts, fermentant le glucose par la voie de la fructose 6-phosphate phosphocétolase. Leur pH optimal de croissance est compris entre 6 et 7, et leur température optimale de croissance est comprise entre 37 et 40°C.

Les bifidobactéries font partie de la flore intestinale humaine normale, et on leur reconnaît de nombreux effets bénéfiques pour la santé.

Par exemple, il a été proposé d'utiliser des bifidobactéries produisant une uréase pour diminuer la concentration en urée dans les liquides physiologiques dans le cas de maladies rénales (Demande FR 2 560 046 aux noms de SCHULER R. et SCHULER A).

Il est également connu que les nourrissons alimentés au sein, qui possèdent une flore intestinale dans laquelle les bifidobactéries prédominent, résistent mieux aux infections et présentent notamment un risque de diarrhée plus faible que les nourrissons nourris avec des préparations lactées industrielles.

Le rôle des bifidobactéries dans cette résistance accrue aux infections n'a pas été complètement élucidé. Il a été rapporté que ces effets bénéfiques étaient associés avec la présence de bifidobactéries viables et capables de s'implanter dans le tube digestif, et il a ainsi été proposé d'utiliser des bifidobactéries vivantes dans des compositions anti-diarrhéiques (Brevet US 5 902 578 au nom des Laboratoires Abbott), et notamment des bifidobactéries sélectionnées notamment sur la base de leur capacité de survie lors de leur conservation et après ingestion (Brevet US 5 711 977 au nom de l'Institut pour le Développement et la Recherche dans l'Industrie Alimentaire (Taiwan)), ainsi que sur la base de leur capacité à s'implanter dans la flore intestinale au détriment des bactéries pathogènes (Demande EP 0 577 904 au nom de la Société des Produits NESTLE).

D'autres études indiquent que certaines bifidobactéries posséderaient un pouvoir immunostimulant qui impliquerait des substances polysaccharidique associées à la paroi bactérienne, ou sécrétées par les bactéries au cours de la fermentation anaérobie. GOMEZ et al., [FEMS Microbiol. Lett., 56, 47-52, (1988), décrivent l'effet immunomodulateur de fractions exocellulaires riches en polysaccharides produites par *Bifidobacterium adolescentis* ; la Demande FR 2 652 590, au nom des Laboratoires OM, décrit un exopolymère immunopotentiateur de nature polysaccharidique produit par *Bifidobacterium infantis longum ;* HOSONO et al., [Biosci. Biotech. Biochem., 61, 312-316 (1997) et Bioscience Microflora, 17, 97-104, (1998), décrivent des polysaccharides immunopotentiateurs produits par différentes espèces de *Bifidobacterium.* L'action immunomodulatrice des bifidobactéries se manifeste également par la régulation de la microflore intestinale, en particulier au détriment du développement d'espèces bactériennes pathogènes. ROMOND et al. [Anaerobe, 3, 137-143, (1997), et J. Dairy Sci., 81, 1229-1235, (1998)] décrivent ainsi des fractions riches en glycoprotéines, produites par *Bifidobacterium breve* en conditions de fermentation anaérobie, et induisant *in vivo* un effet régulateur de la microflore intestinale.

On trouve sur le marché de nombreux produits fermentés par des bifidobactéries, éventuellement associées à d'autres bactéries lactiques, et dont l'ingestion permet de bénéficier des effets immunostimulants des bifidobactéries et de leurs produits de fermentation.

Cependant, dans le cas de l'alimentation infantile, ces produits fermentés ont l'inconvénient d'être trop acides et de présenter, notamment dans le cas des produits en poudre, un aspect non-homogène après reconstitution, du fait de la coagulation des protéines du lait par l'acidité générée lors de la fermentation. Ils sont donc parfois mal acceptés par l'enfant et par la mère.

Or, les Inventeurs ont maintenant découvert une souche de bifidobactéries capable de produire des substances dotées de propriétés immunostimulantes, et d'effectuer cette production sans fermentation, et donc sans acidification du produit final.

Cette souche de *Bifidobacterium breve* qui fait l'objet de la présente invention, a été déposée selon le Traité de Budapest, le 31 mai 1999, sous le numéro I-2219 auprès de la CNCM (Collection Nationale de Cultures de Microorganismes) tenue par l'Institut Pasteur, 25 rue du Docteur Roux, à Paris.

Elle possède les caractéristiques suivantes :
Morphologie : bacilles courts avec rares formes en Y et V
Métabolisme : anaérobie ; production d'acides acétique et lactique L(+)
Fermentation des sucres : glucose, galactose, fructose, maltose, saccharose, lactose, esculine, ribose, mannitol, sorbitol, D raffinose, mélibiose.

La présente Invention a également pour objet un procédé de préparation d'un produit lacté immunostimulant, caractérisé en ce que l'on effectue la bioconversion d'un substrat laitier à l'aide d'une culture de la souche de *Bifidobacterium breve* I-2219, par maintien dudit substrat en contact avec ladite culture, dans des conditions défavorables à la fermentation par ladite souche.

On définit par : « conditions défavorables à la fermentation » des conditions dans lesquelles l'acidification du milieu par ladite souche n'excède pas 0,5 unités pH en 8 heures d'incubation pour un ensemencement initial 1 à 5 x 10⁷ UFC par ml. Elles peuvent aisément être déterminées par l'homme de l'art à l'aide de simples essais, en faisant varier notamment l'aération du milieu de culture, sa pression osmotique et/ou la température de culture, et en mesurant le pH en début et en fin de culture.

De telles conditions peuvent notamment être obtenues par :
- le maintien en conditions aérobies, par exemple sous agitation ;
- le maintien du milieu à une pression osmotique correspondant à 0,93 à 0,97 d'activité de l'eau (AW) ;
- le maintien à une température de 40 à 48°C ;
ainsi que des combinaisons de ces différentes conditions.

La mise en contact du substrat laitier et des *Bifidobacterium* peut être effectuée à raison de 1 x 10⁷ à 1 x 10⁹ UFC par ml de substrat laitier, et la population finale de *Bifidobacterium* à l'issue de la réaction de bioconversion est de 1 x 10⁵ à 1 x 10⁹ UFC par ml de produit.

Le pH du substrat laitier lors de la mise en contact avec les bactéries est de préférence de 6,3 à 7 et le pH du produit à l'issue de la réaction de bioconversion est préférentiellement de 6 à 7.

Selon les conditions utilisées, le temps de contact entre le substrat laitier et les bactéries sera de 6 à 24 heures.

Le substrat laitier peut être du lait, ou tout milieu à base de lait ; il peut s'agir par exemple d'un concentré de lait, d'une base pour aliment lacté infantile, d'une base pour yoghourt, etc...

On peut ajouter au milieu à base de lait les ingrédients nécessaires à la réalisation du produit prêt à consommer que l'on souhaite obtenir. Si par exemple on souhaite obtenir un aliment lacté pour nourrissons, on ajoutera du lactose, des malto-dextrines, des minéraux, des vitamines, des matières grasses, les ingrédients permettant de reconstituer la composition du lait maternel. Si on le souhaite, les matières grasses sont incorporées, puis homogénéisées avec la solution de manière à obtenir une émulsion stable.

La présente invention a également pour objet un produit lacté liquide caractérisé en ce qu'il peut être obtenu en mettant en oeuvre un procédé conforme à invention.

Ce produit présente de préférence, à l'issue de la réaction de bioconversion, un pH de 6 à 7.

A titre de comparaison, les produits de l'art antérieur obtenus par fermentation par *Bifidobacterium* ont, en fin de fermentation un pH de 4 à 4,6.

Ce produit peut être consommé tel quel, ou subir différents traitements, dont la nature varie selon le produit prêt à consommer que l'on souhaite obtenir. Il peut par exemple être additionné d'agents de texture, de saveur, de suppléments vitaminiques ou minéraux, de matières grasses, etc..., si ceux-ci n'ont pas été ajoutés dans le milieu initial. Il peut également être concentré ou dilué.

Un produit lacté conforme à l'invention peut servir de base pour la préparation d'aliments lactés frais.

Avantageusement, il peut également être utilisé pour la préparation, par stérilisation et/ou déshydratation, d'aliments de longue conservation. En effet, il conserve ses propriétés immunostimulantes même en l'absence de bactéries vivantes, par exemple après dessiccation et stérilisation UHT.

La présente invention englobe également les aliments lactés frais, stérilisés, ou déshydratés obtenus à partir d'un produit lacté conforme à l'invention.

Elle englobe aussi les aliments lactés reconstitués obtenus par addition d'eau aux aliments lactés déshydratés conformes à l'invention.

Les aliments lactés (frais, stérilisés, ou reconstitués) conformes à l'invention ont généralement un pH de 6 à 7,5, de préférence de 6,5 à 6,9.

Contrairement aux aliments résultant de la fermentation par *Bifidobactérium* connus dans l'art antérieur, les aliments lactés conformes à l'invention ne sont pas acides, et contiennent les protéines du lait sous forme soluble, non-coagulée. Par addition d'eau aux aliments lactés déshydratés conformes à l'invention on peut ainsi obtenir un produit homogène, sans précipitation ou séparation de phase.

Les aliments lactés conformes à l'invention, de par leur effet immunostimulant, confèrent une protection contre les infections microbiennes et virales comparable à celle des aliments résultant de la fermentation par *Bifidobactérium* connus dans l'art antérieur, sans présenter les inconvénients de ces derniers en termes de modification du goût et de l'aspect du produit. Ils sont particulièrement bien adaptés à l'alimentation infantile, et notamment à l'alimentation des nourrissons, mais peuvent également être utilisés pour l'alimentation de sujets de tous âges.

La présente invention sera mieux comprise à l'aide du complément de description qui va suivre, qui se réfère à des exemples de préparation de produits lactés conformes à l'invention.

### EXEMPLE 1 : FABRICATION D'UNE PREPARATION LACTEE DIETETIQUE POUR NOURRISSONS, EN POUDRE, A ACTIVITE IMMUNOSTIMULANTE

On prépare un concentré de lait, dont la composition, exprimée en g pour 100 g de matières sèches, est la suivante :

| | |
|---|---|
| Protéines de lait (80% de caséine et 20% de protéines de sérum) | 13 |
| Matière grasse végétale | 25,5 |
| Lactose | 42,25 |
| Malto-Dextrines | 16 |
| Minéraux | 3 |
| Vitamines | 0,25 |

On ajoute la matière grasse végétale à un lait de vache écrémé, chauffé à 75°C. On homogénéise à la même température en 2 étapes, la première sous 200 kgs/cm², la seconde sous 50 kgs/cm². On ajoute ensuite le lactose et les malto-dextrines, préalablement mis en solution dans l'eau, puis les solutions de vitamines et de minéraux.

Le mélange final est pasteurisé à 115°C, puis concentré par évaporation à 48% de matière sèche.

Le concentré refroidi à 37°C est ensuite ensemencé à raison de 5% avec une culture de *B. breve* I-2219 contenant 10⁹ bactéries/ml. Le pH initial est de 6,15 et la pression osmotique est de 0,96.

Après incubation pendant 8 h à 37°C, dans un tank sous air avec agitation périodique 10 minutes toutes les 2 heures, le pH est de 6,1 et la population de *B. breve* est de 10⁶ bactéries/ml. L'acidité Dornic est de 48°D.

Le concentré est séché par atomisation. La poudre obtenue, additionnée à de l'eau à raison de 140 g pour un litre d'eau permet d'obtenir un lait reconstitué qui possède les caractéristiques suivantes : pH 6,6, acidité Dornic 12°D ; aspect de lait liquide sans grains de caillé.

### EXEMPLE 2 : FABRICATION D'UNE PREPARATION LACTEE DIETETIQUE POUR NOURRISSONS, A ACTIVITE IMMUNOSTIMULANTE, PRETE A L'EMPLOI, STERILISEE UHT ET CONDITIONNEE ASEPTIQUEMENT

On prépare un mélange dont la composition (en g/litre), est la suivante :

| | |
|---|---|
| Protéines | 21 |
| Matière grasse | 24 |
| Glucides | 83 |
| Minéraux | 5 |
| Vitamines | 0,45 |

Ce mélange est préparé à partir des ingrédients suivants (pour 100 litres de produit fini) :
- 58 litres de lait écrémé,
- 2,4 kgs de matière grasse,
- 4,7 kgs de lactose,
- 0,7 kgs de malto-dextrines,
- 0,3 kg de vitamines,
- 0,05 kg un complexe minéral.

Le lait est au préalable traité thermiquement en système UHT à une température de 115 à 120°C.

Dans le lait refroidi à 70°C, on incorpore la matière grasse et on procède à une homogénéisation en 2 étapes, 200 kgs/ au cours de la 1^{ère} étape, 50 kgs à la 2^{ème} étape.

Le mélange est refroidi à 37 - 38°C, puis ensemencé à 1,5% avec une culture de CNCM I-2219 contenant 1 à 5 x 10⁹ bactéries/ml.

On incube à 37°C pendant 8 heures dans les conditions indiquées à l'exemple 1 ci-dessus, puis on procède au refroidissement, à 5°C.

Le pH du produit est de 6,3 et la population de *B. breve* est de 3 x 10⁷ bactéries/ml. L'acidité Dornic est de 23°D.

Le reste des ingrédients est dissout dans 50 litres d'eau d'environ puis ajouté au produit obtenu à l'issue de l'incubation.

Le mélange ainsi réalisé est soumis à un traitement UHT à 140°C pendant 6 à 7 secondes avant d'être conditionné aseptiquement.

### EXEMPLE 3 : EFFET IMMUNOSTIMULANT DE PRODUITS LACTES CONFORMES A L'INVENTION

L'effet immunostimulant des préparations lactées conformes à l'invention a été étudié comme suit :
- par l'évolution de flore fécale sur des souris à flore humaine ;
- par la régulation du phénomène de translocation sur des souris monoxéniques à *Clostridium perfringens.*

### Etudes de l'évolution de la flore fécale chez les souris à flore humaine :

Les souris sont de la lignée C3H à flore humaine adule.

Il s'agit de la génération G1, la génération G0 étant des souris axéniques associées à l'âge adulte à la flore humaine.
- Nombre de souris par lot :6
- Nombre d'essais : 2 par produit.

Les souris sont gardées 1 semaine dans une même cage puis réparties à raison de 6 par cage.

L'âge des souris au début des essais est de 8 semaines minimum à 11 semaines maximum.

Seront suivis dans la flore fécale :
- les Bifidobactéries
- les *Bactéroïdes Fragilis*
- les spores de *Clostridia*
- les spores de *Cl*. *perfringens* éventuellement

### Techniques microbiologiques

L'échantillon fécal est prélevé extemporanément, pesé aseptiquement et dilué en solution préréduite de RINGER (diluée au quart et supplémentée en chlorhydrate de cystéine à 0,3 g/l).

Dénombrement des bifidobactéries et des bactéroïdes fragilis sur milieux préréduits de BEERENS et BBE ensemencés directement et incubés en anaérobiose.

Pour la recherche des spores de *Clostridium :*
- les suspensions sont chauffées 10 minutes à 75°C et ensemencées sur gélose Columbia supplémentée en glucose (5 g/l) et chlorhydrate de cystéine (0,3 g/l) et incubées 5 jours,
- les colonies de *Clostridium* sont repérées par leur morphologie et une réaction négative à la catalase. La morphologie cellulaire est déterminée après coloration Gram 3.

Les Résultats obtenus avec une préparation lactée témoin ayant été ensemencée avec le ferment CNCM I-2219 et administrée immédiatement sont illustrés par le Tableau I ci-dessous (temps de contact = 0)

**Tableau I**

| | T O | T 7 jours | T 15 jours |
|---|---|---|---|
| Bifidobactéries | 8,2 ± 0,3 | 9,3 ± 0,1 | 8,6 ± 0,1 |
| Bactéroïdes Fragilis | 7,2 ± 0,5 | 9,3 ± 0,1 | 9,2 ± 0,1 |
| Clostridium | 4,3 ± 0,1 | 5,1 ± 0,5 | 6,7 ± 0,3 |

Les résultats sont exprimés en log. et les chiffres représentent la moyenne des résultats des 6 souris ; on constate une augmentation significative de *Bactéroïdes Fragilis* et des *Clostridia,* d'où un risque infectieux.

Les résultats obtenus avec une préparation lactée conforme à l'invention, ensemencée et ayant subi un contact de 8 heures à 37°C avec CNCM I-2219 sont illustrés par le Tableau II ci-dessous.

**Tableau II**

| | T O | T 7 jours | T 15 jours |
|---|---|---|---|
| Bifidobactéries | 7,1 ± 0,1 | 11 ± 0,5 | 10,3 ± 0,8 |
| Bactéroïdes Fragilis | 8 ± 0,2 | 7,9 ± 0,3 | nd < 4,7 log |
| Clostridium | 3,9 ± 0,3 | 4,4 ± 0,2 | 4 (1 souris) 5 autres : absence |
| C. Perfringens | 3,7 ± 0,9 | nd | nd |
| nd : non déterminé | | | |

On constate, par rapport au témoin, une augmentation des Bifidobactéries de 2,5 log et une réduction très importante des Bactéroïdes et des *Clostridia*, notamment après 15 jours d'administration.

### Études sur souris monoxéniques à Clostridium perfringens :

Objectif : vérifier l'influence des produits conformes à l'invention sur la dissémination des bactéries intestinales dans différents organes.

Condition d'expérimentation : souris axéniques (âge = 8 semaines) maintenues en isolateur stérilisé, alimentées sur la base RO3 stérilisée par irradiation.

Produits testés :
- eau ultrapure stérilisée par autoclavage
- eau ultrapure stérilisée par autoclavage additionnée d'une préparation conforme à l'invention (PCI) à raison de 14 g (poids de poudre) pour 100 ml d'eau.

Ces solutions sont préparées stérilement chaque jour et données *ad libitum* aux souris pendant 6 jours. Au terme de cette période, *C. perfringens* souche LAB (origine humaine intestinale) est inoculé à raison de 3,5 à 4,5 log UFC par souris. On mesure l'implantation et la dissémination de *Clostridium perfringens* dans les organes lymphoides par sacrifice de deux souris par lot 24, 48 heures, 4 jours et 7 jours après inoculation. Les dénombrement sont effectués par la méthode du nombre le plus probable à trois tubes en milieu LS (incubation 46°C 24-48 heures).

Les résultats sont illustrés par le Tableau III ci-après :

**Tableau III**

| | J1 | | J2 | | J4 | | J7 | |
|---|---|---|---|---|---|---|---|---|
| | PCI | eau | PCI | eau | PCI | eau | PCI | eau |
| Iléon proximal | 2 | 2 | 0 | 1 | 0 | 2 | 2 | 2 |
| Médian | 2 | 0 | 0 | 1 | 0 | 2 | 2 | 2 |
| Distal | 2 | 0 | 0 | 1 | 0 | 2 | 2 | 2 |
| Caecum | 2 | 0 | 0 | 2 | 1 | 2 | 2 | 2 |
| Colon | 2 | 2 | 0 | 2 | 2 | 2 | 2 | 2 |
| Plaques de Peyer | 1 | 1 | 0 | 0 | 1 | 2 | 2 | 2 |
| Ganglions mésentériques | 0 | 2 | 0 | 0 | 1 | 2 | 1 | 2 |
| Bactérienne | 0 | 0 | 0 | 0 | 0 | 0 | 0 | 0 |
| Rate | 0 | 1 | 0 | 2 | 0 | 2 | 1 | 2 |
| Foie | 0 | 0 | 0 | 0 | 1 | 2 | 2 | 2 |
| Rein | 0 | 1 | 0 | 2 | 1 | 2 | 1 | 2 |
| Poumon | 0 | 0 | 0 | 0 | 0 | 2 | 0 | 0 |
| Légende du Tableau III : 0 = Faible implantation/dissémination 1 = Implantation/dissémination moyenne 2 = Implantation/dissémination importante | | | | | | | | |

On constate :
- un retard d'implantation de 24 heures de *C*. *perfringens* après administration du produit conforme à l'invention ;
- une dissémination dans les organes lymphoïdes faible, chez les souris ayant absorbé le produit conforme à l'invention (PCI).

Ces résultats montrent que les préparations conformes à l'invention régulent la dissémination de *Clostridium perfringens* dans les organes lymphoïdes.

## Revendications

1. Souche de *Bifidobacterium breve,* déposée auprès de la Collection Nationale de Cultures de Microorganismes (CNCM) le 31 mai 1999, sous le numéro I-2219.

2. Procédé de préparation d'un produit lacté immunostimulant, **caractérisé en ce que** l'on effectue la bioconversion d'un substrat laitier à l'aide d'une culture de la souche *Bifidobacterium* selon la revendication 1, par maintien dudit substrat en contact avec ladite culture, dans des conditions défavorables à la fermentation par ladite souche.

3. Procédé selon la revendication 2, **caractérisé en ce que** la mise en contact du substrat laitier et des *Bifidobacterium* est effectuée à raison de 1 x 10⁷ à 1 x 10⁹ UFC par ml de substrat laitier, et la population finale de *Bifidobacterium* à l'issue de la réaction de bioconversion est de 1 x 10⁵ à 1 x 10⁹ UFC par ml de produit.

4. Procédé selon une quelconque des revendications 2 ou 3, **caractérisé en ce que** le pH du substrat laitier lors de la mise en contact avec les *Bifidobacterium* est de 6,3 à 7 et le pH du produit à l'issue de la réaction de bioconversion est de 6 à 7.

5. Procédé selon une quelconque des revendications 2 à 4, **caractérisé en ce que** le temps de contact entre le substrat laitier et les bactéries est de 6 à 24 heures.

6. Produit lacté **caractérisé en ce qu'**il est susceptible d'être obtenu par le procédé selon une quelconque des revendications 2 à 5.

7. Produit lacté selon la revendication 6, **caractérisé en ce que** son pH est de 6 à 7.

8. Aliment lacté obtenu à partir d'un produit selon la revendication 7.

9. Aliment lacté selon la revendication 8, **caractérisé en ce que** son pH est de 6 à 7,5, de préférence de 6,5 à 6,9.

## Patentansprüche

1. Stamm von *Bifidobakterium breve,* hinterlegt bei der Collection Nationale de Cultures de Microorganismes (CNCM) am 31. Mai 1999 unter der Nummer 1-2219.

2. Verfahren zur Herstellung eines immunstimulierenden Milchprodukts, **dadurch gekennzeichnet, dass** man die Biokonversion eines Milchsubstrats mittels einer Kultur eines Stamms von *Bifidobakterium* nach Anspruch 1 dadurch bewirkt, dass das Substrat mit der genannten Kultur unter Bedingungen in Kontakt gehalten wird, die für die Fermentation durch *Bifidobakterium* nachteilig sind.

3. Verfahren nach Anspruch 2, **dadurch gekennzeichnet, dass** das in Kontakt bringen des Milchsubstrats und des *Bifidobakteriums* in einer Konzentration von 1x 10⁷ bis 1x10⁹ UFC pro ml Milchsubstrat bewirkt wird, und die Endpopulation des *Bifidobakteriums* am Ende der Biokonversionsreaktion von 1x10⁵ bis 1x10⁹ UFC pro ml Produkt beträgt.

4. Verfahren nach einem der Ansprüche 2 oder 3, **dadurch gekennzeichnet, dass** der pH des Milchsubstrats während es mit dem *Bifidobakterium* in Kontakt gebracht wird von 6,3 bis 7 und der pH des Produkts am Ende der Biokonversionsreaktion von 6 bis 7 ist.

5. Verfahren gemäß einem der Ansprüche 2 bis 4, **dadurch gekennzeichnet, dass** die Kontaktzeit für den Kontakt zwischen dem Milchsubstrat und den Bakterien von 6 bis 24 Stunden beträgt.

6. Milchprodukt, **dadurch gekennzeichnet, dass** es nach einem Verfahren der Ansprüche 2 bis 5 erhältlich ist.

7. Milchprodukt nach Anspruch 6, **dadurch gekennzeichnet, dass** dessen pH von 6 bis 7 ist.

8. Milchlebensmittel erhalten aus einem Produkt gemäß Anspruch 7.

9. Milchlebensmittel nach Anspruch 8, **dadurch gekennzeichnet, dass** sein pH von 6 bis 7,5 ist, bevorzugt von 6,5 bis 6,9.

## Claims

1. Strain of *Bifidobakterium breve,* deposited at Collection Nationale de Cultures de Microorganismes (CNCM) on 31 May 1999, under the number I-2219.

2. Method of preparing an immunostimulating milk product, **characterized in that** the bioconversion of a dairy substrate is carried out by means of a culture of the *Bifidobacterium* strain according to claim 1, by keeping said substrate in contact with the said culture, under conditions unfavourable to fermentation by *Bifidobacterium.*

3. Method according to claim 2, **characterized in that** the dairy substrate and the *Bifidobacterium* are put in contact at the rate of 1 x 10⁷ to 1 x 10⁹ UFC per ml of dairy substrate, and the final population of *Bifidobacterium* at the end of the bioconversion reaction is 1 x 10⁵ to 1 x 10⁹ UFC per ml of product.

4. Method according to any one of claims 2 or 3, **characterized in that** the pH of the dairy substrate on putting into contact with the *Bifidobacterium* is 6,3 to 7 and the pH of the product at the end of the bioconversion reaction is 6 to 7.

5. Method according to any one of claims 2 to 4, **characterized in that** the contact time between the dairy substrate and the bacteria is 6 to 24 hours.

6. Milk product, **characterized in that** it is able to be obtained by the method according to any one of claims 2 to 5.

7. Milk product according to claim 6, **characterized in that** its pH is 6 to 7.

8. Milk food obtained from a product according to claim 7.

9. Milk food according to claim 8, **characterized in that** its pH is 6 to 7,5, preferably 6,5 to 6,9.
